# EUROPÄISCHE PATENTANMELDUNG

(11) **EP 4 116 124 A1**
(43) Veröffentlichungstag der Anmeldung: **11.01.2023**
(21) Anmeldenummer: 22192773.4
(22) Anmeldetag: 21.03.2019
(51) Int. Cl.: B60K 1/04, B60K 6/46, B60K 6/48, B60K 6/28, B60K 6/32, B60L 50/16, B60L 50/61, B60L 50/75, B60L 58/18

(54) **MODULARES ENERGIEVERSORGUNGSSYSTEM FÜR NUTZFAHRZEUGE**

(30) Priorität: 22.03.2018 DE 202018101618 U
(62) Teilanmeldung aus: 19718252.0
(71) Anmelder: FAUN Umwelttechnik GmbH & Co. KG, 27711 Osterholz-Scharmbeck (DE)
(72) Erfinder: SANDKÜHLER, Georg, 27711 Osterholz-Scharmbeck (DE); KIRCHHOFF, Dr. Johannes F., 58636 Iserlohn (DE)
(74) Vertreter: Laufhütte, Dieter

(57) **Zusammenfassung**

Die Erfindung betrifft ein Energieversorgungssystem für ein elektrisch angetriebenes Nutzfahrzeug, insbesondere ein Abfallsammelfahrzeug, umfassend ein Fahrzeuggestell, ein erstes Antriebsmodul mit einem Elektromotor zum mechanischen Antrieb des Nutzfahrzeugs, und ein erstes Energiespeichermodul, welches das erste Antriebsmodul mit elektrischer Energie versorgt, wobei ein zweites Energiespeichermodul vorgesehen ist, welches wahlweise mit dem ersten Antriebsmodul, mit dem ersten Energiespeichermodul oder mit beiden Modulen reversibel verbindbar ist, wobei die Module in oder an dem Fahrzeuggestell anordenbar sind.

## Beschreibung

Die vorliegende Erfindung betrifft ein Energieversorgungssystem für ein elektrisch angetriebenes Nutzfahrzeug, insbesondere für ein Abfallsammelfahrzeug.

Bedingt durch die umweit- und gesundheitsrelevanten Probleme herkömmlicher Verbrennungsmotoren und durch die voranschreitende Entwicklung von elektrischen Antrieben und Batterien kommen in zunehmendem Maße elektrisch angetriebene Nutzfahrzeuge zum Einsatz.

Dabei ist es ein bekanntes Problem, dass die Möglichkeit, elektrische Energie zum Antrieb von Nutzfahrzeugen in Batterien zu speichern und mitzuführen aufgrund der Baugröße und des Gewichts der eingesetzten Batterien limitiert ist. Die begrenzte Energiespeicherkapazität der mitgeführten Batterien beschränkt wiederum die Einsatzreichweite der Nutzfahrzeuge. Sofern die tägliche Arbeit der eingesetzten Nutzfahrzeuge innerhalb der maximalen Reichweite ausgeführt werden kann, ist ein normaler Einsatz möglich. Ist die zur Ausführung der Arbeit erforderliche Reichweite allerdings größer als die durch die mitgeführten Batterien bestimmte maximale Reichweite, kann das so ausgerüstete Nutzfahrzeug dessen Aufgaben nicht mehr erfüllen.

Dies ist insbesondere dann kritisch, wenn sich die Reichweitenanforderungen nach der Auslieferung bzw. innerhalb der Lebensdauer eines Nutzfahrzeugs ändern, wenn also die Reichweitenanforderung zum Zeitpunkt der Auslieferung mit einer bestimmten Batteriekapazität erfüllbar ist, nach einer Änderung der Einsatzplanung jedoch nicht mehr. Dadurch ist die Flexibilität der Einsatzplanung gattungsgemäßer elektrisch betriebener Nutzfahrzeuge stark limitiert.

Der vorliegenden Erfindung liegt daher die Aufgabe zugrunde, ein Energieversorgungssystem für ein elektrisch angetriebenes Nutzfahrzeug bereitzustellen, welches eine nachträgliche Änderung der maximalen Fahrzeugreichweite ohne Eingriff in die elektrische Fahrzeugarchitektur ermöglicht.

Erfindungsgemäß wird diese Aufgabe durch ein Energieversorgungssystem mit den Merkmalen des Anspruchs 1 gelöst. Vorteilhafte Ausführungsformen der Erfindung ergeben sich aus den sich an den Hauptanspruch anschließenden Unteransprüchen und der nachfolgenden Beschreibung.

Demnach ist ein Energieversorgungssystem für ein elektrisch angetriebenes Nutzfahrzeug, insbesondere für ein elektrisch angetriebenes Abfallsammelfahrzeug, vorgesehen, welches ein Fahrzeuggestell, ein erstes Antriebsmodul mit einem Elektromotor zum mechanischen Antrieb des Nutzfahrzeugs, und ein erstes Energiespeichermodul, welches das erste Antriebsmodul mit elektrischer Energie versorgt umfasst. Ferner ist ein zweites Energiespeichermodul vorgesehen, welches wahlweise mit dem ersten Antriebsmodul, mit dem ersten Energiespeichermodul oder mit beiden Modulen reversibel verbindbar ist, wobei sämtliche Module in oder an dem Fahrzeuggestell anordenbar sind.

Durch die modulare Ausgestaltung des erfindungsgemäßen Energieversorgungssystems kann die Energiespeicherkapazität und somit maximale Reichweite des Nutzfahrzeugs jederzeit und einfach erweitert werden. Ein Eingriff in die bestehende elektrische Fahrzeugarchitektur oder sonstige aufwendige Änderungen am Nutzfahrzeug sind dabei nicht erforderlich. Dadurch kann die Reichweite des Nutzfahrzeugs flexibel an die jeweiligen Anforderungen der aktuellen Einsatzplanung angepasst werden. Das Fahrzeuggestell ist dabei so konstruiert, dass es eine nachträgliche Aufnahme bzw. Umrüstung einer Mehrzahl von zusätzlichen Modulen erlaubt.

Bei dem ersten Energiespeichermodul handelt es sich insbesondere um eine Batterie zur Speicherung von elektrischer Energie. Bei dem zweiten Energiespeichermodul kann es sich ebenfalls um eine Batterie handeln (bzw. eine solche umfassen), welche zur Aufstockung der gesamten Energiespeicherkapazität mit der ersten Batterie und/oder mit dem ersten Antriebsmodul verbunden werden kann. Auf diese Weise lassen sich prinzipiell mehrere Energiespeichermodule bzw. Batterien zusammenschalten und die gesamte Energiespeicherkapazität flexibel anpassen. Sämtliche Module lassen sich dabei in einer beliebigen Kombination zusammenschalten, was eine hohe Flexibilität des erfindungsgemäßen Energieversorgungssystems gewährleistet.

In einer Ausführungsform ist weiterhin ein Energiewandlermodul vorgesehen, welches mit dem ersten Antriebsmodul und/oder dem ersten Energiespeichermodul und/oder dem zweiten Energiespeichermodul in beliebiger Kombination reversibel verbindbar ist. Je nach Anordnung und Verbindungsschema der unterschiedlichen Module lassen sich mit dem erfindungsgemäßen Energieversorgungssystem unterschiedliche und an die jeweiligen Anforderungen angepasste Antriebs- oder Energiespeicherarchitekturen realisieren.

In einer weiteren Ausführungsform ist vorgesehen, dass das Energiewandlermodul eine Brennstoffzelle und das zweite Energiespeichermodul einen Drucktank für einen Treibstoff der Brennstoffzelle umfasst. Die Brennstoffzelle kann beispielsweise mit einer Batterie und/oder dem ersten Antriebsmodul verbunden sein und elektrische Energie für diese bereitstellen. Dadurch kann die Notwendigkeit des regelmäßigen Aufladens von Batterien vermieden oder die Intervalllänge zwischen den Aufladezeitpunkten drastisch verlängert werden. Bei der Brennstoffzelle kann es sich insbesondere um einen Stack bzw. Zellenstapel von mehreren in Reihe geschalteten Brennstoffzellen handeln, um eine höhere Gesamtleistung zu erhalten.

Ferner kann es sich bei dem in dem Drucktank lagerbaren Treibstoff der Brennstoffzelle um Wasserstoff oder Methan handeln. Auch andere Treibstoffe sind hier denkbar. Es können ferner mehrere Energiespeichermodule mit Drucktanks zur Lagerung von mehreren Treibstoffen vorgesehen sein. Dabei ist das zweite Energiespeichermodul vorzugsweise derart an oder in dem Fahrzeuggestell angeordnet, dass der Drucktank von außerhalb des Nutzfahrzeugs zugänglich ist, insbesondere zum Zwecke einer Betankung bzw. Nachfüllung des Treibstoffs. Ferner kann das Energiewandlermodul und/oder das zweite Energiespeichermodul Transport-, Abfuhr-, Aufbereitungs- und/oder Lagermittel für Prozesswasser umfassen.

In einer weiteren Ausführungsform ist weiterhin ein zweites Antriebsmodul vorgesehen, welches mit allen Modulen des Energieversorgungssystems in beliebiger Kombination reversibel verbindbar ist. Durch die flexible Anorden- und Verbindbarkeit des zweiten Antriebsmoduls lassen sich verschiedene Antriebssysteme realisieren, ohne die Fahrzeugarchitektur verändern zu müssen. So können die beiden Antriebsmodule beispielsweise einen seriellen oder parallelen Antrieb bilden, oder beides, wobei durch eine entsprechende Steuerung je nach Bedarf zwischen parallelem oder seriellem Betrieb umgeschaltet werden kann. Bei einem seriellen Betrieb unterstützt das zweite Antriebsmodul das erste Antriebsmodul, wobei das erste Antriebsmodul vorzugsweise mit dem Fahrzeuggetriebe oder der Antriebsachse verbunden ist. Bei einem parallelen Betrieb treiben dagegen beide Antriebsmodule gemeinsam das Nutzfahrzeug an, beispielsweise indem beide Antriebsmodule mit dem Fahrzeuggetriebe oder der Antriebsachse verbunden sind.

In einer weiteren Ausführungsform ist vorgesehen, dass das zweite Antriebsmodul einen Verbrennungsmotor umfasst. In diesem Fall kann weiterhin ein zusätzliches Energiespeichermodul vorgesehen sein, welches einen Treibstofftank für den Verbrennungsmotor umfasst. Ferner ist der Treibstofftank vorteilhafterweise von außerhalb des Nutzfahrzeugs zugänglich, beispielsweise um Treibstoff nachtanken bzw. nachfüllen zu können. Um bei einem seriellen Antrieb mittels der beiden Antriebsmodule die mechanische Leistung des Verbrennungsmotors in elektrische Leistung zur Unterstützung des Elektromotors oder zur Aufladung einer Batterie umwandeln zu können, kann ferner ein weiteres Modul mit einem elektrischen Generator vorgesehen sein. Das zweite Antriebsmodul kann aber auch alternativ einen Elektromotor umfassen.

In einer weiteren Ausführungsform ist weiterhin ein Steuermodul zur Steuerung und/oder Regelung der unterschiedlichen Module vorgesehen, welches mit allen Modulen des Energieversorgungssystems in beliebiger Kombination reversibel verbindbar ist.

In einer weiteren Ausführungsform ist weiterhin ein Systemmodul vorgesehen, welches mit allen Modulen des Energieversorgungssystems in beliebiger Kombination reversibel verbindbar ist, wobei das Systemmodul vorzugsweise Komponenten zur Kühlung und/oder Heizung der Module und/oder Sensoren zur Erfassung von mindestens einem Zustandsparameter eines oder mehrerer Module umfasst. Mehrere unterschiedliche Systemmodule können dabei mit den unterschiedlichen Modulen des Energieversorgungssystems reversibel verbindbar sein, um verschiedene Funktionen erfüllen zu können.

In einer weiteren Ausführungsform ist vorgesehen, dass alle Module wenigstens eine Schnittstelle zur reversiblen Bildung von Verbindungen zwischen den Modulen aufweisen. Dabei kann die Schnittstelle einen Anschluss für die Energieversorgung und/oder einen Hardwareanschluss, d.h. einen Anschluss für die mechanische Anbindung der Module, und/oder einen Anschluss für die zum Betrieb der Module erforderlichen Medien wie beispielsweise Treibstoffe, Prozesswasser, etc. umfassen. Die Schnittstellen der Module werden dabei bereits bei der Herstellung berücksichtigt und erlauben nach der Auslieferung, d.h. während des Betriebs des Nutzfahrzeugs eine flexible Anordnung und Verbindung der einzelnen Module, um unterschiedliche Antriebs- und Energieversorgungsarchitekturen zu realisieren und an den jeweiligen Bedarf anzupassen.

In einer weiteren Ausführungsform ist vorgesehen, dass das Fahrzeuggestell Aufnahmen zur mechanischen Aufnahme der unterschiedlichen Module aufweist. Die Aufnahmen können entweder unterschiedlich ausgestaltet sein, um jeweils entsprechend ihrer Funktion unterschiedlich gestaltete Module aufnehmen zu können, oder sie können identisch oder im Wesentlichen identisch ausgestaltet sein, um eine höhere Flexibilität bei der Anordnung zu ermöglichen. Die Aufnahmen können ferner Fixierungsmittel umfassen, mittels welchen die einzelnen Module in den jeweiligen Aufnahmen reversibel befestigbar sind.

In einer weiteren Ausführungsform ist vorgesehen, dass die Aufnahmen elektrische Schnittstellen aufweisen, über welche die von dem Fahrzeuggestell aufgenommenen Module untereinander elektrisch verbunden sind und über welche elektrische Energie zwischen den Modulen übertragbar ist. Ferner ist es denkbar, dass ein Steuermodul vorgesehen ist, welches nicht direkt mit den anderen Modulen des Energieversorgungssystems elektrisch verbunden ist, sondern indirekt über die elektrischen Schnittstellen des Fahrzeuggestells. So lässt sich leicht und ohne eine komplizierte Verkabelungsstrategie ein elektrisches Verbindungsnetzwerk zwischen allen Modulen herstellen.

In einer weiteren Ausführungsform ist vorgesehen, dass die Aufnahmen so ausgestaltet sind, dass sie von außen zugänglich sind und ein nachträgliches Einbringen oder Herausnehmen der Module erlauben. Dadurch kann die Antriebs- und/oder Energieversorgungsarchitektur des Nutzfahrzeugs einfach nachträglich geändert werden, indem die entsprechenden Module umgerüstet, nachgerüstet und/oder entfernt werden.

Weitere Merkmale, Einzelheiten und Vorteile der Erfindung ergeben sich aus den anhand der Figuren erläuterten Ausführungsbeispielen. Es zeigen:
- Figur 1:: ein Ausführungsbeispiel der Modulanordnung des erfindungsgemäßen Energieversorgungssystems;
- Figur 2:: ein weiteres Ausführungsbeispiel der Modulanordnung des erfindungsgemäßen Energieversorgungssystems;
- Figur 3:: ein weiteres Ausführungsbeispiel der Modulanordnung des erfindungsgemäßen Energieversorgungssystems;
- Figur 4:: ein weiteres Ausführungsbeispiel der Modulanordnung des erfindungsgemäßen Energieversorgungssystems; und
- Figur 5:: ein weiteres Ausführungsbeispiel der Modulanordnung des erfindungsgemäßen Energieversorgungssystems;

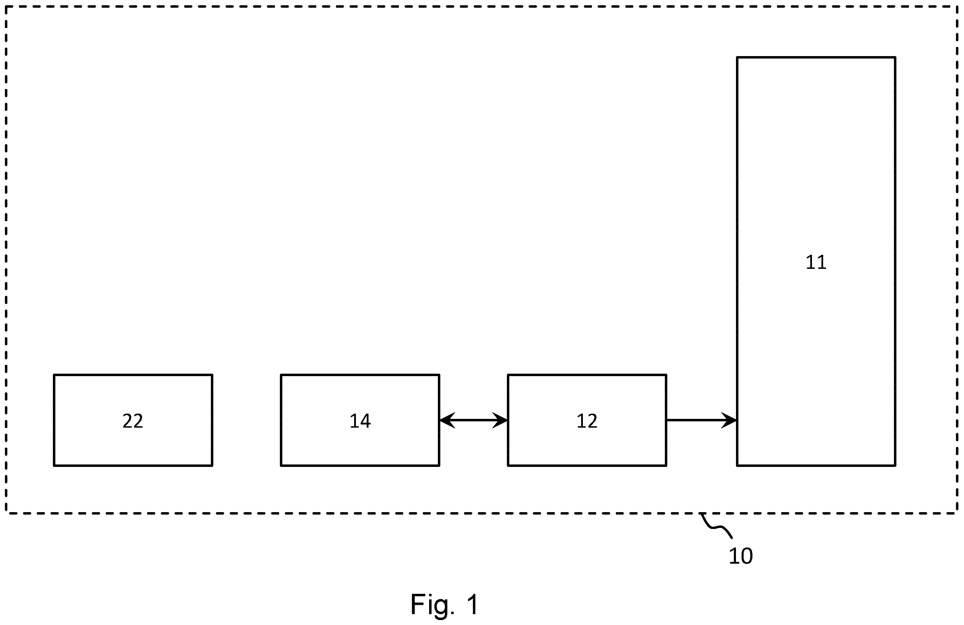

In der Figur 1 ist ein Ausführungsbeispiel der Modulanordnung und -verbindung des erfindungsgemäßen Energieversorgungssystems schematisch dargestellt. Das Fahrzeuggestell 10 des Nutzfahrzeugs, in welchem die Module angeordnet sind, ist als gestrichelter Rahmen gezeigt, während die Verbindungen zwischen den Modulen durch Pfeile angedeutet sind. Dabei kann es sich um elektrische Verbindungen, mechanische Verbindungen (beispielsweise mittels einer Welle), Verbindungen zur Übertragung von Medien wie beispielsweise Treibstoff oder Wasser oder andere Verbindungen handeln.

In diesem Ausführungsbeispiel sind lediglich drei Module vorgesehen: ein erstes Antriebsmodul 12, ein erstes Energiespeichermodul 14 sowie ein Steuermodul 22 zur Steuerung und/oder Regelung des durch die Module und deren Verbindung realisierten Energieversorgungssystems. Das erste Antriebsmodul 12 umfasst einen Elektromotor, welcher mit einem Getriebe bzw. der Antriebswelle 11 des Nutzfahrzeugs verbunden ist und dieses antreibt. Die elektrische Energie zum Antrieb des Elektromotors wird durch eine Batterie des ersten Energiespeichermoduls 14 bereitgestellt. Wie durch den Doppelpfeil angedeutet ist, kann beispielsweise beim Bremsen erzeugte Energie wieder in die Batterie eingespeist werden (elektromotorische Bremse). Dabei wird beim Bremsvorgang der Elektromotor des ersten Antriebsmoduls 12 als Generator genutzt. Das Steuermodul 22 ist über elektrische Schnittstellen an bzw. in den Modulaufnahmen des Fahrzeuggestells 10 mit den übrigen Modulen 12, 14 verbunden.

In diesem Ausführungsbeispiel ist das zweite Energiespeichermodul 16 nicht in das Fahrzeuggestell eingebaut. Dies kann beispielsweise dann sinnvoll sein, wenn das Nutzfahrzeug gemäß dessen Einsatzplanung Aufgaben innerhalb der maximalen Reichweite durchführen soll, die durch die in der Batterie des ersten Energiespeichermoduls 14 speicherbaren Energie bestimmt ist. In diesem Fall ist kein zusätzliches Energiespeichermodul 16 erforderlich und ein Mitführen würde lediglich zu einer unnötigen Gewichtszunahme des Nutzfahrzeugs führen. Stattdessen kann das zweite Energiespeichermodul 16 extern bereitgehalten werden und im Falle einer Änderung der Einsatzplanung, die eine größere Reichweite des Nutzfahrzeugs erfordert, jederzeit nachträglich eingebaut werden.

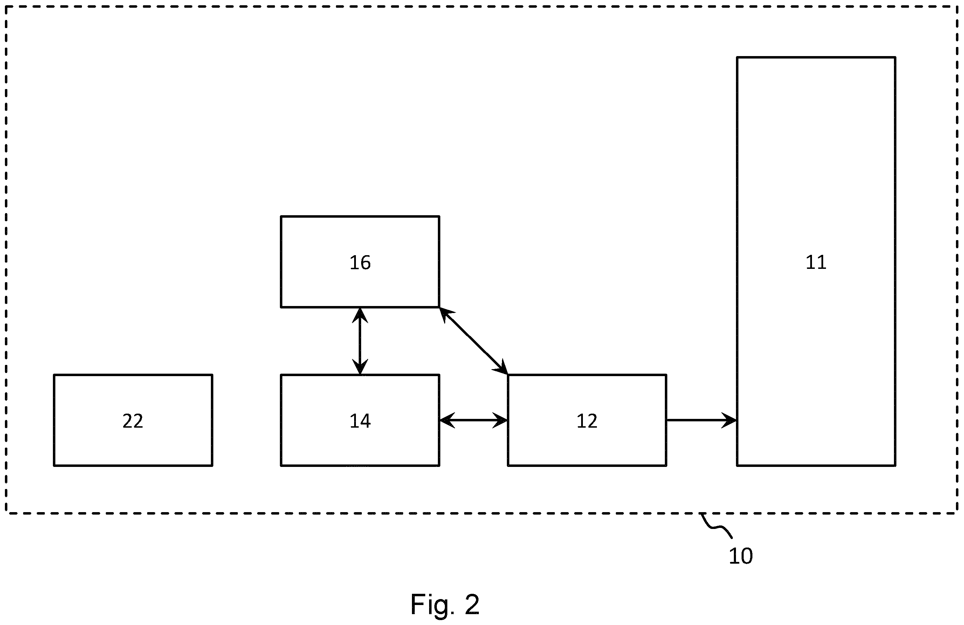

In der Figur 2 ist ein weiteres Ausführungsbeispiel der Modulanordnung und - verbindung des erfindungsgemäßen Energieversorgungssystems dargestellt, bei dem das zweite Energiespeichermodul 16 in das Fahrzeuggestell 11 eingebaut und mit den anderen Modulen 12, 14 verbunden ist. Dadurch ist die gesamte Energiespeicherkapazität und somit die maximale Reichweite des Nutzfahrzeugs gegenüber dem in der Figur 1 gezeigten Ausführungsbeispiel erhöht. Insbesondere umfasst das zweite Energiespeichermodul 16 in diesem Ausführungsbeispiel ebenfalls eine Batterie, und kann identisch oder unterschiedlich zum ersten Energiespeichermodul 14 ausgebildet sein. Ferner ist das zweite Energiespeichermodul 16 sowohl mit dem ersten Energiespeichermodul 14 als auch mit dem ersten Antriebsmodul 12 verbunden, so dass die zusätzliche Energie direkt oder über das erste Energiespeichermodul 14 für den Elektromotor zur Verfügung steht.

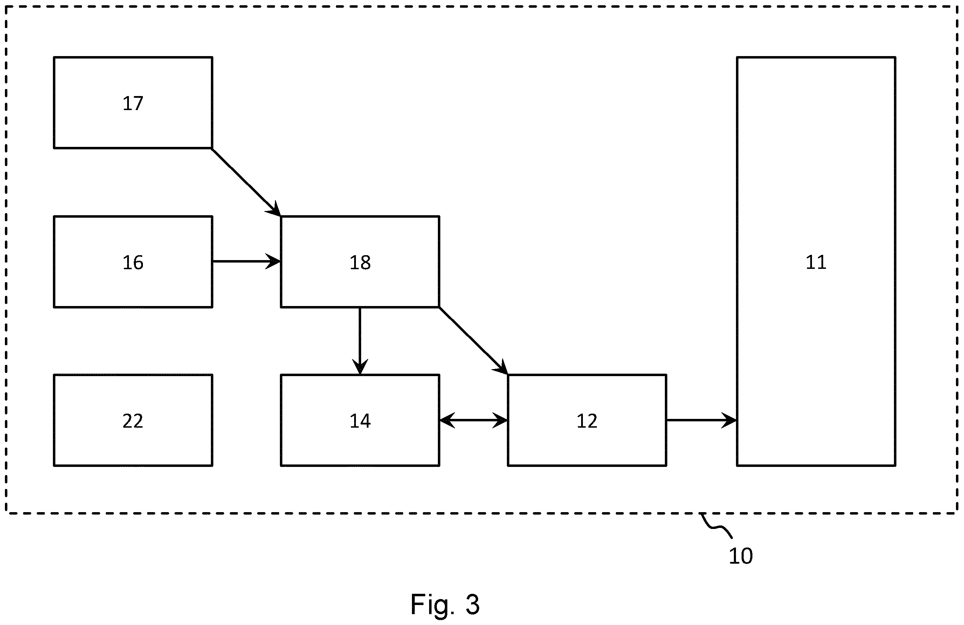

In der Figur 3 ist ein weiteres Ausführungsbeispiel der Modulanordnung und - verbindung des erfindungsgemäßen Energieversorgungssystems dargestellt, bei dem zusätzlich ein Energiewandlermodul 18 und ein Luftzufuhrmodul 17 vorgesehen ist. Das Energiewandlermodul 18 umfasst eine Brennstoffzelle (bzw. einen Stapel von mehreren seriell geschalteten Brennstoffzellen), welche elektrische Energie zur Aufladung der Batterie des ersten Energiespeichermoduls 14 und für den Elektromotor des ersten Antriebsmoduls 12 zur Verfügung stellt. Ob die durch die Brennstoffzelle erzeugte elektrische Energie in die Batterie eingespeist oder direkt zum Antrieb des Elektromotors genutzt wird, kann je nach aktueller Anforderung über das Steuermodul 22 gesteuert werden. Es ist aber auch denkbar, dass lediglich eine der beiden Verbindungsmöglichkeiten permanent realisiert ist und keine Steuerung erforderlich ist.

In diesem Ausführungsbeispiel umfasst das zweite Energiespeichermodul 16 keine Batterie, sondern einen Drucktank zur Lagerung eines Treibstoffs der Brennstoffzelle. Dabei kann es sich beispielsweise um Wasserstoff oder Methan oder einen anderen geeigneten Treibstoff handeln. Ein weiteres Modul 17 umfasst eine Luftzufuhrvorrichtung zur Versorgung der Kathode(n) der Brennstoffzelle mit Sauerstoff. Die Luftzufuhrvorrichtung kann auch in das Energiewandlermodul 18 selbst integriert sein. Zusätzlich kann ein weiteres Systemmodul zur Abfuhr, Lagerung, Aufbereitung und/oder Transport von Prozesswasser vorgesehen sein. Alternativ kann diese Aufgabe auch von dem Luftzufuhrmodul 17 oder dem Energiewandlermodul 18 übernommen werden. Der Drucktank des zweiten Energiespeichermoduls 16 weist ferner eine Öffnung auf, über die der Treibstoff von außerhalb des Nutzfahrzeugs nachgetankt werden kann.

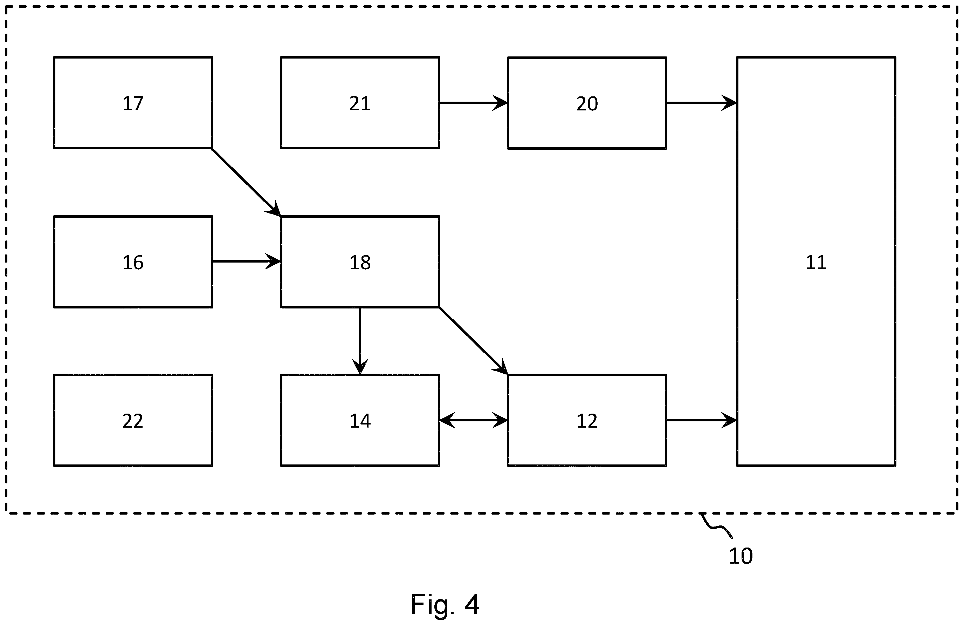

In der Figur 4 ist ein weiteres Ausführungsbeispiel der Modulanordnung und - verbindung des erfindungsgemäßen Energieversorgungssystems dargestellt, bei dem zusätzlich zu der in der Figur 2 gezeigten Anordnung ein zweites Antriebsmodul 20 vorgesehen ist. Das zweite Antriebsmodul 20 umfasst in diesem Ausführungsbeispiel einen Verbrennungsmotor und ist parallel zu dem Elektromotor des ersten Antriebsmoduls 12 mit dem Getriebe bzw. der Antriebswelle 11 des Nutzfahrzeugs verbunden. Der Treibstoff zum Antrieb des Verbrennungsmotors ist in einem dritten Energiespeichermodul 21 gelagert und kann ebenfalls von außerhalb des Nutzfahrzeugs nachgetankt werden. Bei dieser Modulanordnung handelt es sich also um einen parallelen Hybridantrieb mit zusätzlicher Energieversorgung durch eine Brennstoffzelle.

Alternativ kann es sich bei dem Motor des zweiten Antriebsmoduls 20 um einen zweiten Elektromotor handeln. Dieser kann in gleicher Weise wie der Elektromotor des ersten Antriebsmoduls 12 von einer oder mehreren Batterien mit elektrischer Energie versorgt werden.

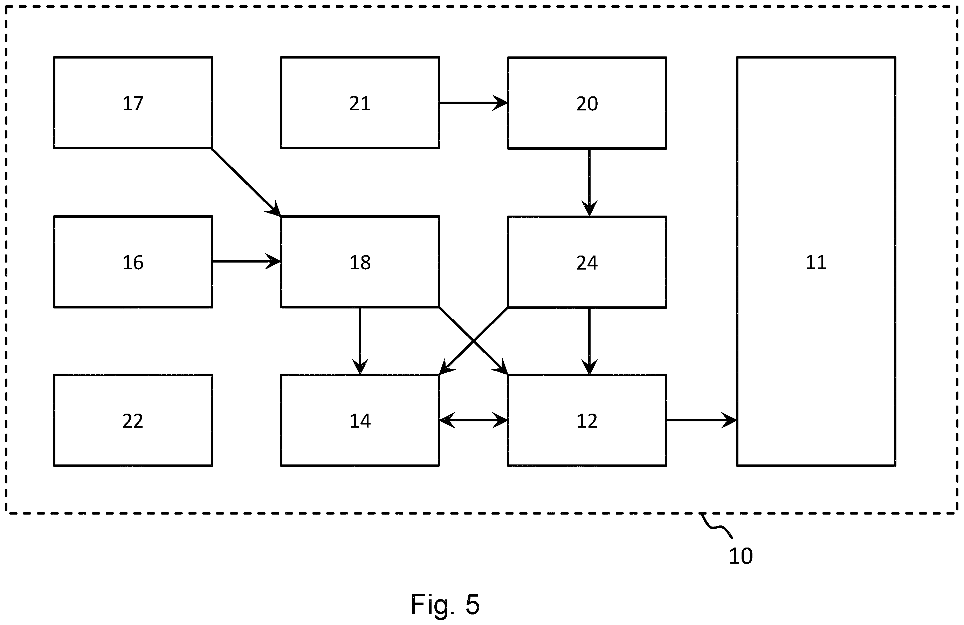

In der Figur 5 ist ein weiteres Ausführungsbeispiel der Modulanordnung und - verbindung des erfindungsgemäßen Energieversorgungssystems dargestellt, bei dem im Unterschied zu der in der Figur 4 gezeigten Anordnung das zweite Antriebsmodul 20 nicht parallel das Nutzfahrzeug antreibt, sondern zum seriellen Antrieb zusammen mit dem Elektromotor eingesetzt wird. Da es sich bei dem Motor des zweiten Antriebsmoduls 20 in diesem Ausführungsbeispiel um einen Verbrennungsmotor handelt, ist für den seriellen Antrieb ein zusätzliches Modul 24 mit einem Generator nötig, welcher die mechanische Leistung des Verbrennungsmotors in elektrische Leistung zum Antrieb bzw. zur Unterstützung des Elektromotors des ersten Antriebsmoduls 12 umwandelt. Dabei kann entweder der Elektromotor direkt mit der elektrischen Energie des Generators 24 versorgt werden, oder die Energie kann zur Aufladung der Batterie des ersten Energiespeichermoduls 14 (sowie evtl. weiterer Energiespeichermodule) eingesetzt werden. Bei dieser Modulanordnung handelt es sich also um einen seriellen Hybridantrieb mit zusätzlicher Energieversorgung durch eine Brennstoffzelle.

Die unterschiedlichen Modulanordnungen der verschiedenen gezeigten Ausführungsbeispiele können selbstverständlich miteinander sowie mit weiteren Modulen bzw. Modulanordnungen kombiniert werden. Durch die Nachrüstbarkeit lassen sich viele verschiedene Antriebs- und/oder Energieversorgungsarten bzw. Energiespeicherarten realisieren und jederzeit einfach umrüsten. Eine mit dem erfindungsgemäßen modularen Energieversorgungssystem ausgestattete Flotte von Nutzfahrzeugen lässt sich daher sehr flexibel einsetzen und ermöglicht eine bedarfsgerechte und flexible Einsatzplanung, welche nicht durch die Herstellungsparameter der Nutzfahrzeuge limitiert ist.

### Bezugszeichenliste:

- 10: Fahrzeuggestell
- 11: Getriebe / Antriebsachse
- 12: Erstes Antriebsmodul
- 14: Erstes Energiespeichermodul
- 16: Zweites Energiespeichermodul
- 17: Modul mit Luftzufuhrvorrichtung
- 18: Energiewandlermodul
- 20: Zweites Antriebsmodul
- 21: Drittes Energiespeichermodul
- 22: Steuermodul
- 24: Modul mit Generator

## Patentansprüche

1. Energieversorgungssystem für ein elektrisch angetriebenes Nutzfahrzeug, insbesondere ein Abfallsammelfahrzeug, umfassend ein Fahrzeuggestell (10), ein erstes Antriebsmodul (12) mit einem Elektromotor zum mechanischen Antrieb des Nutzfahrzeugs, und ein erstes Energiespeichermodul (14), welches das erste Antriebsmodul (12) mit elektrischer Energie versorgt, wobei ein zweites Energiespeichermodul (16) vorgesehen ist, welches wahlweise mit dem ersten Antriebsmodul (12), mit dem ersten Energiespeichermodul (14) oder mit beiden Modulen (12, 14) reversibel verbindbar ist, wobei die Module (12, 14, 16) in oder an dem Fahrzeuggestell (10) anordenbar sind.

2. Energieversorgungssystem gemäß Anspruch 1, **dadurch gekennzeichnet, dass** ein Energiewandlermodul (18) vorgesehen ist, welches mit dem ersten Antriebsmodul (12) und/oder dem ersten Energiespeichermodul (14) und/oder dem zweiten Energiespeichermodul (16) in beliebiger Kombination reversibel verbindbar ist.

3. Energieversorgungssystem gemäß Anspruch 2, **dadurch gekennzeichnet, dass** das Energiewandlermodul (18) eine Brennstoffzelle und das zweite Energiespeichermodul (16) einen Drucktank für einen Treibstoff der Brennstoffzelle umfasst.

4. Energieversorgungssystem gemäß einem der vorhergehenden Ansprüche, **dadurch gekennzeichnet, dass** ein zweites Antriebsmodul (20) vorgesehen ist, welches mit allen Modulen des Energieversorgungssystems in beliebiger Kombination reversibel verbindbar ist.

5. Energieversorgungssystem gemäß Anspruch 4, **dadurch gekennzeichnet, dass** das zweite Antriebsmodul (20) einen Verbrennungsmotor umfasst.

6. Energieversorgungssystem gemäß Anspruch 4 oder 5, **dadurch gekennzeichnet, dass** die Module so miteinander verbindbar sind, dass wahlweise die Antriebsmodule (12, 20) seriell verbunden sind, wobei das zweite Antriebsmodul (20) das erste Antriebsmodul (12) unterstützt, oder parallel zum gemeinsamen Antrieb des Nutzfahrzeugs verbunden sind oder beides.

7. Energieversorgungssystem gemäß einem der vorhergehenden Ansprüche, **dadurch gekennzeichnet, dass** ein Steuermodul (22) zur Steuerung der unterschiedlichen Module vorgesehen ist, welches mit allen Modulen des Energieversorgungssystems in beliebiger Kombination reversibel verbindbar ist.

8. Energieversorgungssystem gemäß einem der vorhergehenden Ansprüche, **dadurch gekennzeichnet, dass** ein Systemmodul (24) vorgesehen ist, welches mit allen Modulen des Energieversorgungssystems in beliebiger Kombination reversibel verbindbar ist, wobei das Systemmodul (24) vorzugsweise Komponenten zur Kühlung und/oder Heizung der Module und/oder Sensoren zur Erfassung von mindestens einem Zustandsparameter eines oder mehrerer Module umfasst.

9. Energieversorgungssystem gemäß einem der vorhergehenden Ansprüche, **dadurch gekennzeichnet, dass** alle Module wenigstens eine Schnittstelle zur reversiblen Bildung von Verbindungen zwischen den Modulen aufweisen.

10. Energieversorgungssystem gemäß Anspruch 9, **dadurch gekennzeichnet, dass** die Schnittstelle einen Anschluss für die Energieversorgung und/oder einen Anschluss für die mechanische Anbindung der Module und/oder einen Anschluss für die zum Betrieb der Module erforderlichen Medien umfasst.

11. Energieversorgungssystem gemäß einem der vorhergehenden Ansprüche, **dadurch gekennzeichnet, dass** das Fahrzeuggestell (10) Aufnahmen zur mechanischen Aufnahme der unterschiedlichen Module aufweist.

12. Energieversorgungssystem gemäß Anspruch 11, **dadurch gekennzeichnet, dass** die Aufnahmen elektrische Schnittstellen aufweisen, über welche alle von dem Fahrzeuggestell (10) aufgenommenen Module untereinander elektrisch verbunden sind und über welche elektrische Energie zwischen den Modulen übertragbar ist.

13. Energieversorgungssystem gemäß Anspruch 12, **dadurch gekennzeichnet, dass** ein Steuermodul (22) zur Steuerung der unterschiedlichen Module über die elektrischen Schnittstellen vorgesehen ist.

14. Energieversorgungssystem gemäß einem der Ansprüche 11 bis 13, **dadurch gekennzeichnet, dass** die Aufnahmen so ausgestaltet sind, dass sie von außen zugänglich sind und ein nachträgliches Einbringen oder Herausnehmen der Module erlauben.
